# EUROPÄISCHE PATENTSCHRIFT

(11) **EP 3 953 092 B1**
(45) Veröffentlichungstag und Bekanntmachung des Hinweises auf die Patenterteilung: **18.03.2026**
(21) Anmeldenummer: 20716513.5
(22) Anmeldetag: 09.04.2020
(51) Int. Cl.: B23K 9/02, B23K 9/09, B23K 9/167, B23K 9/173, B23K 9/095

(54) **MEHRFACH IMPULSSCHWEISSVERFAHREN**
MULTIPLE PULSE WELDING
PROCÉDÉ DE SOUDAGE À ARC PULSÉ MULTIPLE

(30) Priorität: 10.04.2019 EP 19168535
(43) Veröffentlichungstag der Anmeldung: 16.02.2022
(73) Patentinhaber: FRONIUS INTERNATIONAL GmbH, 4643 Pettenbach (AT)
(72) Erfinder: FRAUENSCHUH, Rupert, 4643 Pettenbach (AT); ARTELSMAIR, Josef, 4643 Pettenbach (AT); SÖLLINGER, Dominik, 4643 Pettenbach (AT); MUSS, Michael, 4643 Pettenbach (AT)
(74) Vertreter: Patentanwälte Pinter & Weiss OG
(86) Internationale Anmeldenummer: PCT/EP2020/060254
(87) Internationale Veröffentlichungsnummer: WO 2020/208187

(56) Entgegenhaltungen:
- WO-A2-2014/140772
- US-A1- 2002 190 045
- US-A1- 2008 011 728
- US-A1- 2015 343 549

## Beschreibung

Die gegenständliche Erfindung betrifft ein Verfahren zur Synchronisierung von zumindest zwei Impulsschweißprozessen zur Durchführung eines Mehrfach-Impulsschweißverfahrens, wobei ein Impulsschweißprozess aus periodisch mit einer Impulsfrequenz wiederholten Schweißzyklen mit einer Impulsstromphase und einer Grundstromphase besteht, wobei jeder Impulsschweißprozess mit einem Schweißgerät durchgeführt wird, wobei die Schweißgeräte mittels einer Kommunikationsverbindung miteinander verbunden werden und über die Kommunikationsverbindung eine Synchronisationsinformation von einem sendenden Schweißgerät an zumindest ein empfangendes Schweißgerät gesendet wird und diese Synchronisationsinformation im empfangenden Schweißgerät verwendet wird, um den mit dem empfangenden Schweißgerät ausgeführten Impulsschweißprozess auf den mit dem sendenden Schweißgerät ausgeführten Impulsschweißprozess zu synchronisieren, wobei das sendende Schweißgerät als Synchronisationsinformation einen Synchronisationspuls an zumindest ein empfangendes Schweißgerät aussendet, wobei der Synchronisationspuls in einem definierten zeitlichen Bezug zum Schweißzyklus des Impulsschweißprozesses des sendenden Schweißgerätes steht, und der Schweißzyklus des Impulsschweißprozess des empfangenden Schweißgerätes auf den empfangenen Synchronisationspuls synchronisiert wird. Ferner betrifft die Erfindung eine Anordnung zur Durchführung eines Mehrfach-Impulsschweißverfahrens.

Die gegenständliche Erfindung betrifft das Impulsschweißen mit abschmelzender oder nicht abschmelzender Schweißelektrode mit Impulslichtbogen. Bei diesem Schweißverfahren wechseln sich regelmäßig mit vorgegebener Impulsfrequenz ein Grundschweißstrom und ein dazu erhöhter Impulsschweißstrom ab. Während der Grundschweißstromphase mit dem Grundschweißstrom brennt der Lichtbogen mit geringer Leistung um das Schmelzbad flüssig zu halten. Während der Impulsstromphase mit dem Impulsschweißstrom bildet sich ein großer Tropfen des Schweißdrahtes als Zusatzwerkstoff, der letztendlich abgelöst wird und ins Schmelzbad fällt. Der Schweißdraht kann dabei gleichzeitig auch als abschmelzende Schweißelektrode dienen, beispielsweise beim MIG (Metall Inertgas) oder MAG (Metall Aktivgas) Schweißen, oder kann zu einem zwischen einer nicht abschmelzenden Schweißelektrode und dem Werkstück brennenden Lichtbogen zugeführt werden, beispielsweise beim WIG (Wolfram Inertgas) Schweißen. Im Falle des WIG Schweißen wird das Schweißverfahren häufig auch als DC Puls oder WIG AC bezeichnet. In Abhängigkeit vom Drahtdurchmesser und vom Werkstoff des Schweißdrahtes sollen beim MIG/MAG Schweißen die Schweißdrahtvorschubgeschwindigkeit und die Impulsfrequenz so gewählt und aneinander angepasst werden, dass bei jedem Stromimpuls ein Tropfen erzeugt und abgelöst wird. Schweißdrahtvorschubgeschwindigkeit und Impulsfrequenz sind dabei voneinander abhängig. Bei unpassend gewählten Werten für die Schweißdrahtvorschubgeschwindigkeit und die Impulsfrequenz kann kein stabiler Schweißprozess realisiert werden und/oder kann keine gute Schweißqualität erzielt werden. Mit dem Impulsschweißen kann der Wärmeeintrag in das Werkstück reduziert und kontrolliert werden, womit auch dünnere Werkstücke geschweißt werden können. Zusätzlich ergeben sich mit dem Impulsschweißen qualitativ hochwertige Schweißergebnisse, beispielsweise lassen sich damit Spritzer stark reduzieren.

Um die Schweißleistung zu erhöhen, sind auch Mehrfach-Impulsschweißverfahren, beispielsweise ein Tandem-Impulsschweißverfahren, bekannt geworden, bei denen zumindest zwei Impulsschweißverfahren gleichzeitig betrieben werden. Vorzugsweise schmelzen dabei zumindest zwei Schweißdrähte in ein gemeinsames Schmelzbad ab. Die einzelnen Impulsschweißverfahren können aber auch jeweils ein eigenes Schmelzbad haben. Hierfür werden für jeden Impulsschweißprozess eigenständige Schweißgeräte benötigt, also jeweils eine Stromquelle, ein Schweißbrenner und gegebenenfalls eine Schweißdrahtvorschubeinheit. Mit jedem Schweißgerät wird ein Impulsschweißverfahren realisiert. Solche Mehrfach-Impulsschweißverfahren sind beispielsweise aus der US 2015/0343549 A1 (Basis für den Oberbegriff der Ansprüche 1 und 9), US 2008/0011728 A1, US 2002/0190045 A1 und der WO 2014/140772 A2 bekannt. Das Mehrfach-Impulsschweißen kann für MIG/MAG so betrieben werden, dass die Schweißprozesse gestartet werden und unabhängig voneinander betrieben werden, dass also die Schweißdrahtvorschubgeschwindigkeit und die Impulsfrequenz für jeden Schweißprozess eigens eingestellt werden. Beim WIG Schweißen werden üblicherweise nur die Impulsfrequenzen eingestellt, wobei aber auch die Schweißdrahtvorschubgeschwindigkeit des Zusatzwerkstoffes eingestellt werden könnte. Das ist für den Schweißer aber aufwendiger, da in allen Schweißgeräten die Schweißparameter entsprechend gesetzt werden müssen. Abgesehen davon hat man damit wenig bis keinen Einfluss auf eine allfällige gegenseitige Beeinflussung durch die gleichzeitig ablaufenden Schweißprozesse, was die Schweißqualität vermindern kann.

Daher ist auch schon ein Tandem-Impulsschweißverfahren mit synchronisierten Schweißprozessen bekannt geworden, bei dem einem Schweißgerät eine Impulsfrequenz vorgegeben wird, der das andere Schweißgerät nachfolgt. Beide Schweißprozesse sind damit aufeinander synchronisiert und schweißen mit derselben Impulsfrequenz. Das kann aber beim MIG/MAG Schweißen zu Problemen führen, wenn der Schweißdraht des nachgeführten Schweißprozesses mit einer anderen Schweißdrahtvorschubgeschwindigkeit zugeführt wird als im anderen Schweißprozess, was häufig zur Erhöhung der Prozessstabilität erwünscht ist. Auch beim WIG Schweißen wird synchronisierte Schweißprozesse angestrebt. Eine geringere Schweißdrahtvorschubgeschwindigkeit erfordert aber normalerweise auch eine niedrigere Impulsfrequenz, weil die Leistungsbilanz von Drahtvorschub und Schweißstrom aufeinander abgestimmt sein müssen. Bei einem zu großen Unterschied zwischen der Schweißdrahtvorschubgeschwindigkeit im führenden Impulsschweißprozess und im nachgeführten Impulsschweißprozesskann es daher passieren, dass der nachgeführte Impulsschweißprozessmit einer zu hohen Impulsfrequenz (die vom führenden Schweißprozess übernommen wurde) betrieben wird, wodurch sich unter Umständen mit dem nachgeführten Impulsschweißprozess kein stabiler Schweißprozess realisieren lässt oder sich ein schlechteres Schweißergebnis (z.B. Schweißspritzer) ergibt.

Um dieses Problem zu beheben wurde in der DE 10 2007 016 103 A1 bereits vorgeschlagen, die Impulsfrequenz des nachgeführten Impulsschweißprozesses eines Tandem-Impulsschweißverfahrens als ein ganzzahliges Vielfaches der Impulsfrequenz des führenden Impulsschweißprozesses eingestellt werden kann. Dabei sollen die Impulsfrequenzen der beiden Impulsschweißprozesse so gewählt werden, dass sich die Impulsstromphasen nicht überschneiden. Es wird jedoch nicht ausgeführt, wie die Synchronisation der beiden Impulsschweißprozesse realisiert werden kann.

Es ist daher eine Aufgabe der gegenständlichen Erfindung ein Verfahren zur Synchronisierung mehrerer gleichzeitig ablaufender Impulsschweißprozesse in einem Mehrfach-Impulsschweißverfahren anzugeben.

Diese Aufgabe wird erfindungsgemäß mit den kennzeichnenden Merkmalen der unabhängigen Ansprüche gelöst.

Mit dem Synchronisationspuls ist das empfangende Schweißgerät in der Lage den durchzuführenden Impulsschweißprozess auf den Impulsschweißprozess im sendenden Schweißgerät zu synchronisieren, um den gewünschten Bezug der beiden Impulsschweißprozesse zueinander sicherzustellen. Um ein Auseinanderdriften der beiden Impulsschweißprozesse zu verhindern, könnte ein solcher Synchronisationspuls auch in regelmäßigen Abständen wiederholt werden.

Über die Kommunikationsverbindung kann damit auf einfache Weise die Synchronisationsinformation gesendet werden, die für die Synchronisation der Impulsschweißprozesse benötigt wird. Die Synchronisation kann damit automatisiert erfolgen, ohne dass ein Schweißer eingreifen muss, oder Schweißparameter setzen muss.

Für eine einfache Implementierung des Mehrfach-Impulsschweißverfahrens kann die Impulsfrequenz des Impulsschweißprozesses des empfangenden Schweißgerätes im empfangenden Schweißgerät bekannt sein oder aus einer bekannten Schweißkennlinie ermittelt werden.

Erfindungsgemäß wird als Synchronisationsinformation zusätzlich die Impulsfrequenz des sendenden Schweißgerätes gesendet werden. Im empfangenden Schweißgerät wird mittels eines bekannten Frequenzteilers aus der erhaltenen Impulsfrequenz des sendenden Schweißgerätes die vom empfangenden Schweißgerät einzustellende Impulsfrequenz ermittelt. Das ermöglicht es, den Impulsschweißprozess im empfangenden Schweißgerät dem Impulsschweißprozess im sendenden Schweißgerät nachzuführen.

Eine weitere erfindungsgemäße Ausgestaltung ergibt sich, wenn das sendende Schweißgerät als Synchronisationsinformation, zumindest während der Synchronisation, laufend Synchronisationspulse mit der Impulsfrequenz des sendenden Schweißgerätes an das empfangende Schweißgerät sendet und das empfangende Schweißgerät aus der Periode der empfangenen Synchronisationspulse die Impulsfrequenz des sendenden Schweißgerätes ermittelt und daraus mittels eines bekannten Frequenzteilers die im empfangenden Schweißgerät einzustellende Impulsfrequenz ermittelt. Das ermöglicht es, den Impulsschweißprozess im empfangenden Schweißgerät dem Impulsschweißprozess im sendenden Schweißgerät nachzuführen.

Besonders vorteilhaft wird der Frequenzteiler im empfangenden Schweißgerät aus einer bekannten Schweißkennlinie ermittelt und aus der Impulsfrequenz des sendenden Schweißgerätes und dem Frequenzteiler die vom empfangenden Schweißgerät einzustellende Impulsfrequenz ermittelt. Vorzugsweise wird aus der Schweißkennlinie aus einer eingestellten Schweißdrahtvorschubgeschwindigkeit des Impulsschweißprozesses des empfangenden Schweißgerätes eine für den Impulsschweißprozess benötigte Impulsfrequenz ermittelt, wobei aus der benötigten Impulsfrequenz und der erhaltenen Impulsfrequenz des sendenden Schweißgerätes der Frequenzteiler ermittelt wird. Damit kann die Impulsfrequenz des empfangenden Schweißgerätes unter Berücksichtigung einer hinterlegten Schweißkennlinie optimal gesetzt werden, womit der Schweißprozess bei der Ermittlung der Impulsfrequenz Berücksichtigung findet.

Für das Mehrfach-Impulsschweißverfahren kann es vorteilhaft sein, wenn der Synchronisationspuls mit einer vorgegebenen Phasenverschiebung zum Beginn des Schweißzyklus im sendenden Schweißgerät gesendet wird und/oder der Schweißzyklus im empfangenden Schweißgerät mit einer vorgegebenen Phasenverschiebung nach dem Empfang des Synchronisationspulses gestartet wird. Auf diese Weise kann eine gewünschte Phasenlage der Impulsschweißprozesse sichergestellt werden.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 eine Anordnung zum Durchführen eines Mehrfach-Impulsschweißverfahrens,
Fig.2 die Schweißzyklen in einem Mehrfach-Impulsschweißverfahren,
Fig.3 die Synchronisation der Impulsschweißprozesse mittels Kommunikationsverbindung zwischen den beteiligten Schweißgeräten,
Fig.4 die Synchronisation mittels Synchronisationspulsen,
Fig.5 eine mögliche Schweißkennlinie eines Impulsschweißprozesses,
Fig.6 Impulsschweißprozesse mit Zwischenpulsen und
Fig.7 ein Umschalten der Synchronisation während des Schweißens.

Die Erfindung wird nachfolgend für ein Tandem-Impulsschweißverfahren, also mit zwei Impulsschweißprozessen, als Beispiel eines Mehrfach-Impulsschweißverfahrens, erläutert. Es ist aber natürlich denkbar, die nachfolgenden Ausführungen auf ein Mehrfach-Impulsschweißverfahren mit mehr als zwei Impulsschweißverfahren auszuweiten. Ein Mehrfach-Impulsschweißverfahren zeichnet sich insbesondere dadurch aus, dass gleichzeitig zumindest zwei Impulsschweißprozesse laufen, bei einem Tandem-Impulsschweißverfahren folglich zwei Impulsschweißprozesse. Die mehreren Impulsschweißprozesse können alle in dasselbe Schmelzbad arbeiten, es können aber auch verschiedene Impulsschweißprozesse in teilweise verschiedene Schmelzbäder arbeiten.

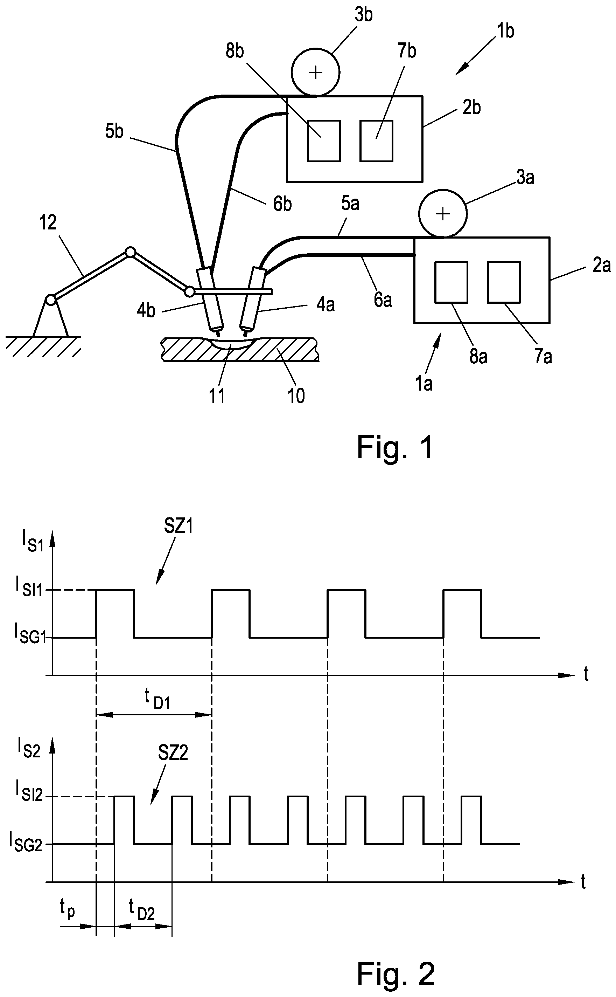

In Fig.1 ist eine mögliche Konfiguration für ein Tandem-Impulsschweißverfahren schematisch dargestellt. Es sind zwei separate Schweißgeräte 1a, 1b mit jeweils einer Stromquelle 2a, 2b, einer Schweißdrahtvorschubeinheit 3a, 3b (beim WIG Schweißen auch ohne Schweißdrahtvorschubeinheit 3a, 3b) und einem Schweißbrenner 4a, 4b vorgesehen. Die Stromquellen 2a, 2b stellen jeweils die benötigte Schweißspannung zur Verfügung, die jeweils an den Schweißdraht 5a, 5b, als abschmelzende Schweißelektrode des Schweißprozesses, angelegt wird. Dazu kann in einem Schweißbrenner 4a, 4b beispielsweise eine Kontakthülse vorgesehen sein, an die die Schweißspannung angelegt wird, z.B. über eine Schweißleitung 6a, 6b, und die vom Schweißdraht 5a, 5b kontaktiert wird. Es kann aber auch ein Schweißbrenner 4a, 4b mit einer nicht abschmelzenden Schweißelektrode verwendet werden, an die die Schweißspannung über die Schweißleitung 6a, 6b angelegt wird. In diesem Fall wird der Schweißdraht 5a, 5b in den Lichtboden zwischen der nicht abschmelzenden Schweißelektrode und dem Werkstoff brennenden Lichtbogen zugeführt.

Damit fließt jeweils ein bestimmter Schweißstrom über die Schweißelektrode, wobei hierfür natürlich eine, in Fig.1 nicht dargestellte, zweite Schweißleitung zur Kontaktierung des Werkstückes vorgesehen ist. Der Schweißdraht 5a, 5b wird von der Schweißdrahtvorschubeinheit 3a, 3b jeweils mit einer bestimmten Schweißdrahtvorschubgeschwindigkeit zugeführt. Die Schweißdrahtvorschubeinheit 3a, 3b kann jeweils im Schweißgerät 1a, 1b integriert sein, kann aber auch eine separate Einheit sein. Der Schweißdraht 5a, 5b und die Schweißleitung 6a, 6b eines Schweißgerätes 1a, 1b, und gegebenenfalls auch weitere Leitungen zwischen der Stromquelle 2a, 2b und dem Schweißbrenner 4a, 4b (beispielsweise eine Steuerleitung oder eine Kühlmittelleitung), können auch in einem gemeinsamen, auch mehreren, Schlauchpaket geführt sein. Das Schlauchpaket kann an den Schweißbrenner 4a, 4b und an die Stromquelle 2a, 2b über geeignete Kupplungen angekoppelt werden. In einem Schweißgerät 1a, 1b ist auch eine Steuereinheit 7a, 7b vorgesehen, die den Impulsschweißprozess steuert und überwacht. Hierfür sind in der Steuereinheit 7a, 7b benötigte Schweißparameter, wie beispielswiese die Impulsfrequenz, die Schweißdrahtvorschubgeschwindigkeit, die Werte der Schweißströme, die Impulsstromdauer, Grundstromdauer etc., vorgegeben oder einstellbar. Zur Eingabe oder zur Anzeige gewisser Schweißparameter oder eines Schweißstatus kann auch eine Eingabe-/Ausgabeeinheit 8a, 8b vorgesehen sein. Ein solches Schweißgerät 1a, 1b ist natürlich hinlänglich bekannt und muss hier nicht näher beschrieben werden. Für ein Mehrfach-Impulsschweißverfahren mit mehr als zwei Impulsschweißprozessen sind natürlich entsprechend mehr Schweißgeräte 1a, 1b vorgesehen. Mehrere Schweißgeräte 1a, 1b eines Mehrfach-Impulsschweißverfahrens, gegebenenfalls auch mit den zugehörigen Schweißdrahtvorschubeinheiten 3a, 3b, können auch in einem gemeinsamen Gehäuse angeordnet sein.

Zur Realisierung eines Tandem-Schweißprozesses sind die beiden Schweißbrenner 4a, 4b im gezeigten Ausführungsbeispiel örtlich relativ zueinander angeordnet, sodass diese in ein gemeinsames Schmelzbad 11 an einem Werkstück 10 arbeiten. Diese Anordnung zueinander kann fix sein, beispielsweise in dem beide Schweißbrenner 4a, 4b an einem Schweißroboter 12 angeordnet werden, der beide Schweißbrenner 4a, 4b führt (so wie in Fig.1 angedeutet). Die Anordnung kann aber auch veränderlich sein, beispielsweise in dem je ein Schweißbrenner 4a, 4b von einem Schweißroboter 12 geführt wird. Es ist auch unerheblich, ob die Schweißbrenner 4a, 4b bezogen auf die Schweißrichtung hintereinander, nebeneinander oder sonst irgendwie versetzt zu einander angeordnet sind. Ebenso ist es unerheblich, ob mit einem Impulsschweißprozess ein Verbindungsschweißen oder ein Auftragsschweißen, oder ein sonstiges Schweißverfahren, realisiert wird. Diese Ausführungen gelten natürlich in analoger Weise auch für einen Mehrfach-Impulsschweißprozess mit mehr als zwei Impulsschweißprozessen.

Anhand der Fig.2 wird das hinlänglich bekannte Impulsschweißverfahren anhand des Verlaufs des Schweißstromes I_{S} über die Zeit t erläutert. Während des Impulsschweißens wechseln sich ein Grundstrom I_{SG} und ein demgegenüber erhöhter Impulsstrom I_{SI} periodisch mit einer vorgegebenen Impulsfrequenz f_{D} ab. Die Impulsfrequenz f_{D} ergibt sich natürlich als Kehrwert der Periodendauer t_{D} eines Schweißzyklus SZ bestehend aus einer Grundstromphase mit dem Grundstrom I_{SG} und einer Impulsstromphase mit dem Impulsstrom I_{SI}. Während der Impulsstromphase soll jeweils ein Schweißtropfen in das jeweilige Schmelzbad 11 abgelöst werden. Während einer Schweißung kann sich die Impulsfrequenz f_{D} und/oder der Wert des Grundstromes I_{SG} oder des Impulsstromes I_{SI} auch ändern.

Die zeitlichen Verläufe der Schweißströme I_{S1}, I_{S2} sind in Fig.2 natürlich idealisiert und vereinfacht dargestellt. In echt werden sich natürlich gewisse Stromrampen an den Flanken ergeben. Ebenso ist es oftmals vorgesehen, dass der Schweißstrom I_{S} beim Übergang vom Impulsstrom I_{SI} zum Grundstrom I_{SG} stufenförmig, oder mit einem anderen Stromverlauf, abfällt, um die Tropfenablöse zu unterstützen. Auch sind oftmals in der Grundstromphase kurze Zwischenstromimpulse vorgesehen, um die Prozessstabilität zu erhöhen, wie weiter unten noch ausführlicher beschrieben wird. Das ändert aber nichts an der Periodendauer t_{D} eines Schweißzyklus SZ und an der sich daraus ergebenden Impulsfrequenz f_{D}.

Bei einem erfindungsgemäßen Tandem-Impulsschweißprozess sind die beiden Impulsschweißprozesse aufeinander synchronisiert, indem die Impulsfrequenzen f_{D1}=1/t_{D1}, f_{D2}=1/t_{D2} der beiden Impulsschweißprozesse in einem bestimmten vorgegebenen Bezug zueinander stehen und indem die sich ergebenden Schweißzyklen SZ1, SZ2 einen bestimmten vorgegebenen Phasenbezug zueinander haben. Vorzugsweise gilt, dass eine Impulsfrequenz ein ganzzahliges Vielfaches der anderen Impulsfrequenz ist. Das gilt natürlich in analoger Weise wieder allgemein auch für ein Mehrfach-Impulsschweißverfahren, in dem die einzelnen Impulsschweißprozesse aufeinander synchronisiert sind. Im Beispiel der Fig.2 ist die Impulsfrequenz f_{D2}, beispielsweise der nachgeführten Impulsschweißprozesses, doppelt so hoch wie die Impulsfrequenz f_{D1}, beispielsweise des führenden Impulsschweißprozesses, was aber auch umgekehrt sein kann. Zusätzlich kann der Schweißstromverlauf mit der höheren Impulsfrequenz f_{D2} gegenüber dem Schweißstromverlauf mit der niedrigeren Impulsfrequenz f_{D1} um eine Phasenverschiebung t_{P} zeitlich verschoben sein, d.h. dass die Impulse mit Impulsstrom I_{SI} zeitlich versetzt beginnen. Die Phasenverschiebung kann aber natürlich auch als Phasenwinkel bezogen auf die Impulsfrequenz f_{D1} des führenden Impulsschweißprozesses angegeben sein.

Üblicherweise wird der führende Impulsschweißprozess die höhere Impulsfrequenz f_{D1} aufweisen und der nachgeführte Impulsschweißprozess die demgegenüber niedrigere oder gleiche Impulsfrequenz f_{D2}. Im Fall eine Mehrfach-Impulsschweißverfahrens gibt es einen führenden Impulsschweißprozess und mehrere nachgeführte Impulsschweißprozesse, wobei auch in diesem Fall der führende Impulsschweißprozess vorzugsweise die höchste Impulsfrequenz aufweist und die nachgeführten Impulsschweißprozesse demgegenüber niedrigere oder gleiche Impulsfrequenzen. Die Impulsfrequenzen der nachgeführten Impulsschweißprozesse müssen aber nicht zwingend gleich sein.

Für die Durchführung des beschriebenen Tandem-Impulsschweißprozesses müssen in den beiden Schweißgeräte 1a, 1b, bzw. in den Steuereinheiten 7a, 7b, die jeweilige Impulsfrequenz f_{D1}, f_{D2} und auch eine allfällige Phasenverschiebung t_{P} bekannt sein. Die zeitlichen Verläufe der Schweißströme I_{S1}, I_{S2} müssen also aufeinander synchronisiert sein. Um das zu bewerkstelligen müssen die beiden Schweißgeräte 1a, 1b aufeinander synchronisiert werden.

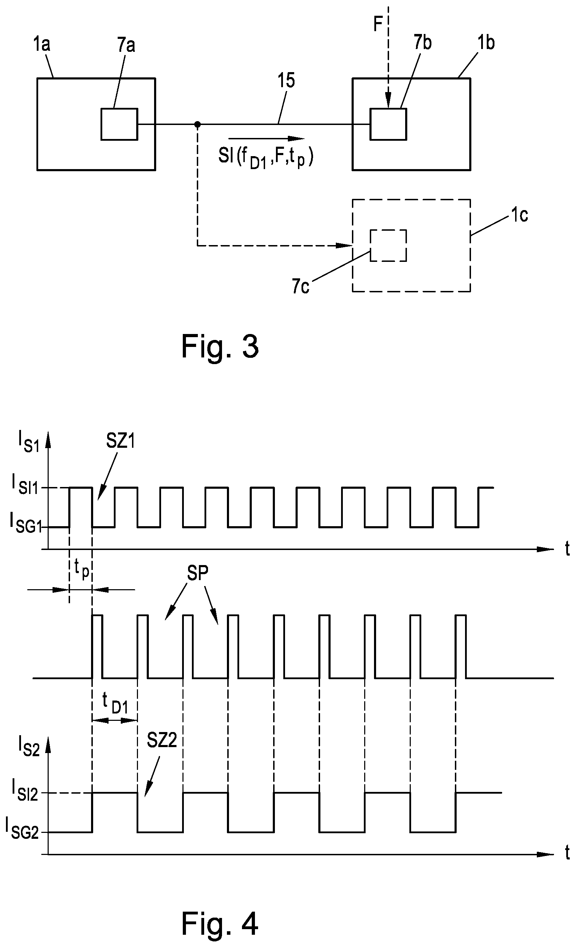

Hierfür sind die Schweißgeräte 1a, 1b, 1c des Mehrfach-Impulsschweißverfahrens über die Steuereinheiten 7a, 7b, 7c der Schweißgeräte 1a, 1b, 1c, über eine Kommunikationsverbindung 15, die sowohl drahtgebunden als auch drahtlos sein kann, miteinander verbunden, wie in Fig.3 dargestellt. Über die Kommunikationsverbindung 15 wird zu Beginn des Mehrfach-Impulsschweißprozesses eine Synchronisationsinformation SI von einem Schweißgerät 1a, vorzugsweise des führenden Impulsschweißprozesses, an das andere Schweißgerät 1b, 1c, vorzugsweise der nachgeführten Impulsschweißprozesse, gesendet. Diese Synchronisationsinformation SI wird im empfangenden Schweißgerät 1b, 1c verwendet, um den mit diesem Schweißgerät 1b, 1c ausgeführten Impulsschweißprozess an den mit dem sendenden Schweißgerät 1a ausgeführten Impulsschweißprozess anzupassen, insbesondere zu synchronisieren.

Im einfachsten nicht erfindungsgemäßen Fall ist die Synchronisationsinformation SI ein einzelner Synchronisationspuls SP, der von einem sendenden Schweißgerät 1a über die Kommunikationsverbindung 15 gesendet wird. Der Synchronisationspuls SP steht dabei in einem definierten zeitlichen Bezug zum Schweißzyklus SZ1 im sendenden Schweißgerät 1a. Vorzugsweise wird der Synchronisationspuls SP zu Beginn eines Schweißzyklus SZ1 (beispielsweise der Beginn einer Grundstromphase) mit der Impulsfrequenz f_{D1} im sendenden Schweißgerät 1a gesendet. Der Synchronisationspuls SP kann auch mit einer bestimmten hinterlegten oder eingestellten Phasenverschiebung t_{P} dazu, gesendet werden. Um eine genauere Synchronisation zu erzielen können in der Phasenverschiebung t_{P} auch bekannte Verzögerungszeiten, beispielsweise der Übertragung, einer Reaktionszeit des empfangenden Schweißgerätes 1b, 1c, etc., berücksichtigt werden.

Der Synchronisationspuls SP kann dabei als Strom- oder Spannungspuls auf einer drahtgebundenen Kommunikationsverbindung 15 zwischen den beiden Schweißgeräten 1a, 1b gesendet werden. Es ist aber auch möglich die Kommunikationsverbindung 15 als Datenbus auszuführen, auf dem Busnachrichten versendet werden. In diesem Fall kann der Synchronisationspuls SP als Busnachricht gesendet werden, was sowohl drahtgebunden (Kabel, Glasfaser, etc.), als auch drahtlos (Wifi, Bluetooth, etc.) realisiert werden kann. Im empfangenden Schweißgerät 1b, 1c wird der Schweißstromverlauf I_{S} auf den empfangenen Synchronisationspuls SP synchronisiert, beispielsweise indem ein Schweißzyklus SZ2 im empfangenden Schweißgerät 1b mit der Impulsfrequenz f_{D2} bei Empfang des Synchronisationspulses gestartet wird (beispielsweise mit der Grundstromphase). Die jeweilige Impulsfrequenz f_{D1}, f_{D2} kann in den Schweißgeräten 1a, 1b, 1c hinterlegt oder eingestellt sein.

Ebenso kann in einem Schweißgerät 1b, üblicherweise das nachgeführte Schweißgerät, eine Phasenverschiebung t_{P} hinterlegt oder eingestellt sein. Damit kann der Schweißzyklus SZ2 im empfangenden Schweißgerät 1b auch um eine Phasenverschiebung t_{P} nach Empfang des Synchronisationspulses SP gestartet werden.

Weitere benötigte Schweißparameter, wie die Schweißströme I_{SI1}, I_{SG1}, I_{SI2}, I_{SG2}, die Impulsstromdauern, Grundstromdauern etc., sind natürlich ebenso in den Schweißgeräten 1a, 1b, 1c hinterlegt oder eingestellt, sodass die Schweißgeräte 1a, 1b, 1c die Impulsschweißprozesse ausführen können.

An sich ist es für die Erfindung egal, welches Schweißgerät 1a, 1b das sendende, also dazu in der Synchronisation führende, und welches das empfangende, also das in der Synchronisation nachgeführte, ist. Das kann beispielsweise in den am Mehrfach-Impulsschweißverfahren beteiligten Schweißgeräten 1a, 1b, 1c hinterlegt oder eingestellt sein. Diese Einstellung kann sich natürlich auch ändern, auch während des Schweißens. Diese Einstellung kann vom Schweißer vorgenommen werden, beispielsweise über die jeweilige Eingabe-/Ausgabeeinheit 8a, 8b.

Es kann aber auch eine übergeordnete Steuereinheit, z.B. eine Robotersteuerung oder Prozesssteuerung, vorgesehen sein, die mit den Schweißgeräten 1a, 1b, 1c verbunden ist, und die diese Einstellung vorgibt. Dazu können die Schweißgeräte 1a, 1b, 1c und die übergeordnet Steuereinheit über einen Datenbus parallel oder seriell miteinander verbunden sein, um diese Einstellung vornehmen zu können. Falls die Kommunikationsverbindung 15 als Datenbus ausgeführt ist, dann kann dieser Datenbus auch für diese Einstellung verwendet werden.

Ebenso ist es denkbar, dass die Einstellung wer in der Synchronisation führt im Schweißgerät 1a, 1b, 1c in Abhängigkeit von einem Schweißparameter, beispielsweise der Impulsfrequenz f_{D} oder der Schweißdrahtvorschubgeschwindigkeit v_{D} hinterlegt ist. Hier könnte beispielsweise vorgesehen sein, dass immer das Schweißgerät 1a, 1b, 1c, das den Impulsschweißprozess mit der höchsten Impulsfrequenz f_{D} ausführt, das sendende Schweißgerät ist und die anderen die empfangenden.

In einer Erweiterung können über die Kommunikationsverbindung 15 zusätzliche Informationen übertragen werden.

Gemäß einer Ausgestaltung der Erfindung sendet das die Synchronisationsinformation SI sendende Schweißgerät 1a als Synchronisationsinformation SI auch die eigene Impulsfrequenz f_{D1} oder, nicht erfindungsgemäß, die vom empfangenden Schweißgerät 1b einzustellende Impulsfrequenz f_{D2}, beispielsweise in einer eigenen oder gleichen Busnachricht. Wird die eigene Impulsfrequenz f_{D1} gesendet, dann kann im empfangenden Schweißgerät 1b ein Frequenzteiler F hinterlegt oder eingestellt sein (wie in Fig.3 angedeutet). Mit dem Frequenzteiler F wird dann die Impulsfrequenz f_{D2} aus der empfangenen Impulsfrequenz f_{D1} einfach ermittelt als f_{D2} = f_{D1} / F. Hierbei ist es natürlich vorteilhaft wenn die beiden Impulsfrequenzen f_{D1}, f_{D2} in einem ganzzahligen Verhältnis (z.B. ½, ½, ¼) zueinander stehen, der Frequenzteiler F also eine ganze Zahl ist. Das ermöglicht es auch, die Impulsfrequenzen f_{D1}, f_{D2} während des Mehrfach-Impulsschweißprozesses zu verändern. Dazu reicht es beispielsweise, wenn das führende Schweißgerät 1a eine neue Impulsfrequenz f_{D1} an das nachgeführte Schweißgerät 1b senden, das dann anhand des Frequenzteilers F die Impulsfrequenz f_{D2} neu ermittelt und einstellt. Die Impulsfrequenz f_{D2} des empfangenden Schweißgerätes 1b folgt damit der Impulsfrequenz f_{D1} des sendenden Schweißgerätes 1a. Im anderen Fall erhält das empfangende Schweißgerät 1b direkt die einzustellende Impulsfrequenz f_{D2} vom sendenden Schweißgerät 1a, womit am empfangenden Schweißgerät 1b diesbezüglich keinerlei Einstellungen erforderlich sind. In beiden Fällen wird die Handhabung des Mehrfach-Impulsschweißprozesses für den Schweißer erleichtert.

Grundsätzlich kann genauso auch für die gewünschte Phasenverschiebung t_{D} vorgegangen werden. Die Phasenverschiebung t_{D}, die auch Null sein kann, kann in einem Schweißgerät 1a, 1b hinterlegt oder eingestellt sein, oder kann von einem Schweißgerät 1a als Synchronisationsinformation SI an das andere Schweißgerät 1b gesendet werden, beispielsweise in einer eigenen Busnachricht oder in einer gemeinsamen Busnachricht mit anderer Synchronisationsinformation SI.

Die Phasenverschiebung t_{D} kann an einem Schweißgerät 1a, 1b auch variabel eingestellt werden, beispielsweise als Zeit oder auch als Prozentangabe. Vorzugsweise kann die Phasenverschiebung t_{D} zwischen 0-100% in einzelnen Prozentschritten, z.B. in 1% Schritten, variabel eingestellt werden. Dabei entspricht beispielsweise 25% einer Phasenverschiebung von 90° und 50% einer Phasenverschiebung von 180°. Die Einstellung der Phasenverschiebung t_{D} kann vom Schweißer vorgenommen werden, oder kann auch von einer übergeordneten Steuereinheit vorgegeben werden, beispielsweise wieder über einen Datenbus wie oben beschrieben.

Es wäre auch denkbar, dass die gewünschte Phasenverschiebung t_{D} über den Zeitpunkt des Absendens der Synchronisationsinformation SI synchronisiert wird. Das sendende Schweißgerät 1a kann beispielsweise die Synchronisationsinformation SI um die Phasenverschiebung t_{D} nach Beginn der Impulsstromphase verschoben an das empfangende Schweißgerät 1b senden. In diesem Fall wäre die gewünschte Phasenverschiebung t_{D} im sendenden Schweißgerät 1a hinterlegt oder dort eingestellt. Das empfangende Schweißgerät 1b beginnt dann die eigene Impulsstromphase oder Grundstromphase (je nach Synchronisierung) bei Empfang der Synchronisationsinformation SI, wodurch sich automatisch die gewünschte Phasenverschiebung t_{D} einstellt. Somit ist eine Änderung/Anpassung der Phasenverschiebung t_{D} während des Schweißprozesses möglich.

In einer weiteren erfindungsgemäßen Ausgestaltung sendet das sendende Schweißgerät 1a, beispielsweise das im Tandem-Impulsschweißprozesses führende Schweißgerät, laufend als Synchronisationsinformation SI Synchronisationspulse SP in der eigenen Impulsfrequenz f_{D1}, also mit einer Zeitperiode t_{D1}, wie in Fig.4 dargestellt. Die Synchronisationspulse SP stehen wiederum in einen definierten zeitlichen Bezug zum Schweißzyklus SZ1 im sendenden Schweißgerät. Beispielsweise wird ein Synchronisationspuls SP bei jedem Beginn eines Schweißzyklus SZ1 gesendet, hier zu Beginn der Impulsstromphase unter Berücksichtigung einer Phasenverschiebung t_{P}. Diese Synchronisationspulse SP können wiederum als elektrische Strom- oder Spannungspulse auf einer elektrischen Leitung als Kommunikationsverbindung 15 gesendet werden oder als Busnachrichten auf einem drahtgebundenen oder drahtlosen Datenbus als Kommunikationsverbindung 15. Das empfangende Schweißgerät 1b, beispielsweise das im Tandem-Impulsschweißprozesses nachgeführte Schweißgerät, ermittelt sich in einer Auswerteeinheit (Hardware und/oder Software) in der Steuereinheit 7b, aus der Periode t_{D1} der empfangenen Synchronisationspulse einfach die Impulsfrequenz f_{D1} des sendenden Schweißgerätes 1a, beispielsweise in einer Komparatorschaltung mit Zähler oder aus einem Zeitstempel der empfangenen Busnachrichten.

Der Schweißzyklus SZ2 im empfangenden Schweißgerät 1b wird wieder zeitlich auf die Synchronisationspulse SP synchronisiert, beispielsweise indem der Beginn eines Schweißzyklus SZ2 im empfangenden Schweißgerät 1b auf den Empfang eines Synchronisationspulses SP synchronisiert wird.

Im empfangenden Schweißgerät 1b kann wiederum ein Frequenzteiler F hinterlegt sein, aus dem dann wieder die Impulsfrequenz f_{D2} im empfangenden Schweißgerät 1b aus f_{D2} = f_{D1}/F ermittelt werden kann. Hierbei ist es natürlich vorteilhaft wenn die beiden Impulsfrequenzen f_{D1}, f_{D2} in einem ganzzahligen Verhältnis zueinander stehen. Nachdem die Synchronisationspulse SP, zumindest während der Synchronisation, laufend gesendet werden folgt die Impulsfrequenz f_{D2} des empfangenden Schweißgerätes 1b automatisch der Impulsfrequenz f_{D1} des sendenden Schweißgerätes 1a.

Das sendende Schweißgerät 1a kann neben den Synchronisationspulsen SP auch den einzustellenden Wert der Impulsfrequenz f_{D2} an das empfangende Schweißgerät 1b senden, beispielsweise wieder in einer eigenen oder der gleichen Busnachricht. In diesem Fall können die Synchronisationspulse SP zur Sicherstellung und Kontrolle der Synchronisation der beiden Schweißgeräte 1a, 1b verwendet werden.

Über eine Zeitverschiebung der Synchronisationspulse SP bezogen auf den Schweißzyklus SZ1 im sendenden Schweißgerät 1a kann natürlich wieder eine Phasenverschiebung t_{P} der beiden Stromverläufe in den beiden Schweißgeräten 1a, 1b eingestellt werden. Das empfangende Schweißgerät 1b synchronisiert dabei den zeitlichen Verlauf des Schweißstromes I_{S2} auf die empfangenen Synchronisationspulse SP, wie in Fig.4 dargestellt. Alternativ kann eine gewünschte Phasenverschiebung t_{P} als Schweißparameter im empfangenden Schweißgerät 1b hinterlegt oder eingestellt sein. In diesem Fall würde das empfangende Schweißgerät 1b den Schweißzyklus SZ2 zeitlich um die Phasenverschiebung t_{D} verschoben auf den Empfang des Synchronisationspulses SP beziehen. Grundsätzlich ist aber auch beides gleichzeitig möglich.

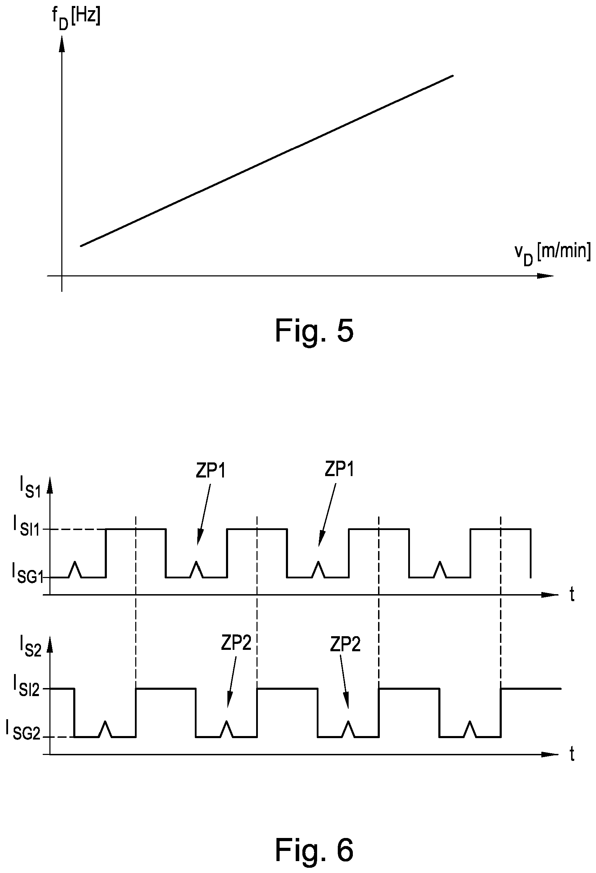

Die für den Impulsschweißprozess benötigte Impulsfrequenz f_{D1}, f_{D2}, oder ein Frequenzteiler F, kann vom Schweißer an den Schweißgeräten 1a, 1b eingestellt werden. Das erfordert allerdings ein tiefes Prozesswissen des Schweißers, was nicht vorausgesetzt werden kann. Daher kann vorgesehen sein, dass eine Impulsfrequenz f_{D1}, f_{D2} aus anderen gesetzten Schweißparametern, insbesondere aus einer Schweißdrahtvorschubgeschwindigkeit v_{D} (die üblicherweise wiederum abhängig vom Schweißstrom ist) oder einem Schweißstrom I_{S}, abgeleitet wird. Im Schweißgerät 1a, 1b, beispielsweise in der Steuereinheit 7a, 7b oder einer Speichereinheit, kann dazu eine Schweißkennlinie für verschiedene Schweißdrähte, wie in Fig.5 am Beispiel der Schweißdrahtvorschubgeschwindigkeit v_{D} dargestellt, hinterlegt sein. Je nach eingestellter Schweißdrahtvorschubgeschwindigkeit v_{D} kann daraus die benötigte Impulsfrequenz f_{D} entnommen werden. Zur Synchronisation ist es vorteilhaft, wenn eine derart ermittelte Impulsfrequenz f_{D} auf das nächste ganzzahlige Verhältnis zur anderen Impulsfrequenz f_{D} gesetzt wird. Daraus kann dann auch ein benötigter Frequenzteiler F abgeleitet werden, der vorzugsweise auf die nächste ganze Zahl gesetzt wird. Daraus folgt, dass anstelle der Impulsfrequenz f_{D1} in äquivalenter Weise auch die Schweißdrahtvorschubgeschwindigkeit v_{D1} an das empfangende Schweißgerät 1b gesendet werden könnte, wenn in beiden Schweißgeräten 1a, 1b die Schweißkennlinie hinterlegt ist.

In Fig.6 ist ein Tandem-Impulsschweißprozess dargestellt mit f_{D1} = f_{D2} (also Frequenzteiler F = 1) und mit einer Phasenverschiebung t_{P} von 90°. Zusätzlich sind in beiden Impulsschweißprozessen in den Grundstromphasen kurze Zwischenimpulse ZP1, ZP2 vorgesehen, also kurze Anstiege des Schweißstromes I_{S1}, I_{S2}. Die Dauer und der Anstieg der Zwischenimpulse ZP1, ZP2 kann natürlich in den Schweißgeräten 1a, 1b hinterlegt sein oder konfiguriert werden. Hierbei ist es natürlich möglich, dass Zwischenimpulse ZP1, ZP2 nicht in allen Impulsschweißprozessen des Mehrfach-Impulsschweißverfahrens vorgesehen sind. Gleichfalls ist es denkbar, dass solche Zwischenimpulse ZP1, ZP2 nicht in jedem Schweißzyklus SZ1,SZ2 vorgesehen sind, sondern nur in jedem x-ten Schweißzyklus, was ebenfalls hinterlegt oder konfiguriert werden kann. Vorzugsweise werden die Zwischenimpulse ZP1, ZP2 in einem Impulsschweißprozess so gesetzt, dass diese in der Impulsstromphase des jeweils anderen Impulsschweißprozesses liegen. Das kann beispielsweise sehr einfach bei einer Phasenverschiebung von 180° erreicht werden, bei der sich eine Grundstromphase und eine Impulsstromphase in den beiden Impulsschweißprozessen überlappen.

Die erfindungsgemäße Synchronisierung der Impulsschweißprozesse eines Mehrfach-Impulsschweißverfahrens kann während des Schweißens nach Bedarf gestartet und gestoppt werden. Vorzugsweise wird die Synchronisierung beim Starten des Schweißens erst gestartet nachdem die Lichtbögen der einzelnen Impulsschweißprozesse stabil brennen, also nach dem Zünden der Lichtbögen oder wenn die eingestellte Schweißdrahtvorschubgeschwindigkeit v_{D} erreicht ist. Auch in der Endphase des Mehrfach-Impulsschweißprozesses, beispielsweise wenn begonnen wird die Schweißdrahtvorschubgeschwindigkeit v_{D} zu reduzieren, wird die Synchronisation vorzugsweise beendet. Das kann automatisiert von den Schweißgeräten 1a, 1b erfolgen, oder manuell durch den Schweißer.

Es ist auch möglich, dass sich während des Schweißens die Synchronisation der Impulsschweißprozesse verändert. Beispielsweise kann während des Schweißens ein anderer Frequenzteiler F eingestellt werden oder sich ergeben. Es kann aber auch die Schweißdrahtvorschubgeschwindigkeit des nachgeführten Impulsschweißprozesses verändert werden, was ebenfalls eine andere Impulsfrequenz f_{D2} oder Frequenzteiler F bewirken kann. Gleichfalls kann eine andere Phasenverschiebung t_{P} zwischen Impulsschweißprozessen gefordert oder eingestellt werden. Solche Änderungen können beispielsweise vom Mehrfach-Impulsschweißprozess (z.B. ein automatisiert ablaufendes Schweißprogramm) und/oder vom Schweißer bewirkt werden.

Beispielsweise kann die Abweichung zwischen einer vom führenden Impulsschweißprozess geforderten Impulsfrequenz f_{D1}, auf die sich der nachgeführten Impulsschweißprozess synchronisiert, und einer Impulsfrequenz f_{D2}, die sich aus der hinterlegten Schweißkennlinie (z.B. wie in Fig.5) aufgrund der eingestellten Schweißparameter ergeben würde, einen im Schweißgerät 1a, 1b konfigurierten oder hinterlegten Grenzwert überschreiten. In diesem Fall kann die Steuereinheit 7a, 7b des Schweißgerätes 1a, 1b beispielsweise auf den nächsten Frequenzteiler F umschalten, beispielsweise von F = 1 auf F = 2 oder auch in die andere Richtung, also von F = 2 auf F = 1. Dabei kann bedarfsweise auch eine Phasenverschiebung t_{P} angepasst werden.

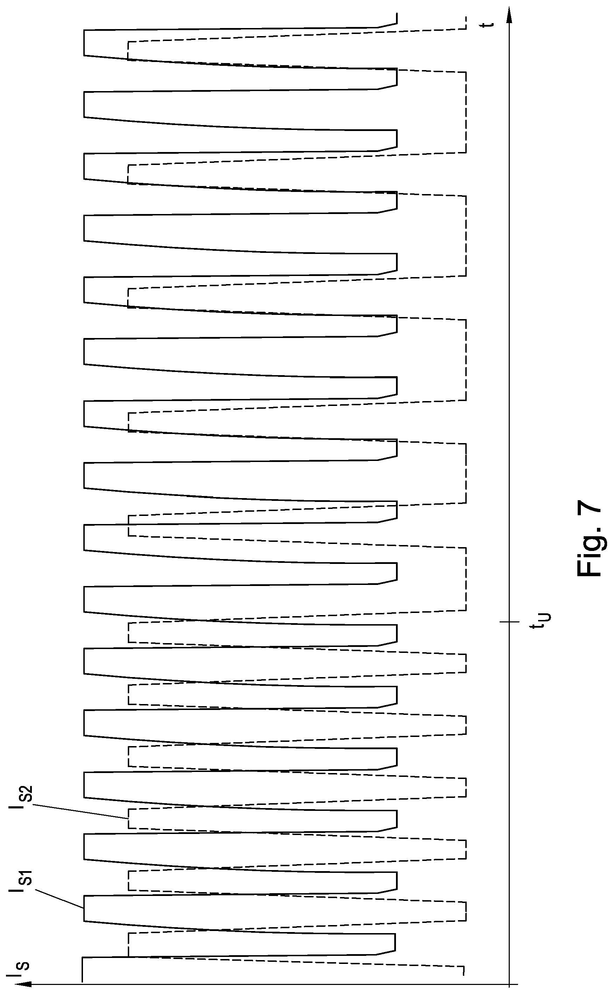

In Fig.7 ist beispielsweise das Umschalten zwischen einer Synchronisation mit gleichen Impulsfrequenzen f_{D1}, f_{D2} in einem Tandem-Impulsschweißverfahren, f_{D1} = f_{D2}, und einer Phasenverschiebung t_{P} von 180° auf eine halbierte Impulsfrequenz f_{D2} des nachgeführten Impulsschweißprozesses, also f_{D2} = f_{D1} / 2 oder Frequenzteiler F = 2, und einer Phasenverschiebung t_{P} von 0° dargestellt. Gezeigt sind der Schweißstrom I_{S1} des führenden Impulsschweißprozesses und der Schweißstrom I_{S2} des nachgeführten Impulsschweißprozesses (strichliert) über die Zeit t. Das Umschalten erfolgt zum Zeitpunkt t_{U}. Mit der Umschaltung wird auf die neue Impulsfrequenz f_{D2} umgeschaltet. Die neue Phasenlage wird gegebenenfalls innerhalb von wenigen Schweißzyklen SZ1, SZ2, je nach Implementierung der Steuerung, eingestellt. Im Beispiel nach Fig.2 wird die neue Phasenlage innerhalb von vier Schweißzyklen SZ1 des führenden Impulsschweißprozesses eingestellt.

## Patentansprüche

1. Verfahren zur Synchronisierung von zumindest zwei Impulsschweißprozessen zur Durchführung eines Mehrfach-Impulsschweißverfahrens, wobei ein Impulsschweißprozess aus periodisch mit einer Impulsfrequenz (f_{D1}, f_{D2}) wiederholten Schweißzyklen (SZ1, SZ2) mit einer Impulsstromphase und einer Grundstromphase besteht, wobei jeder Impulsschweißprozess mit einem Schweißgerät (1a, 1b) durchgeführt wird, wobei die Schweißgeräte (1a, 1b) mittels einer Kommunikationsverbindung (15) miteinander verbunden werden und über die Kommunikationsverbindung (15) eine Synchronisationsinformation (SI) von einem sendenden Schweißgerät (1a) an zumindest ein empfangendes Schweißgerät (1b) gesendet wird und diese Synchronisationsinformation (SI) im empfangenden Schweißgerät (1b) verwendet wird, um den mit dem empfangenden Schweißgerät (1b) ausgeführten Impulsschweißprozess auf den mit dem sendenden Schweißgerät (1a) ausgeführten Impulsschweißprozess zu synchronisieren, wobei das sendende Schweißgerät (1a) als Synchronisationsinformation (SI) zumindest einen Synchronisationspuls (SP) an zumindest ein empfangendes Schweißgerät (1b) sendet, wobei der zumindest eine Synchronisationspuls (SP) in einem definierten zeitlichen Bezug zum Schweißzyklus (SZ1) des Impulsschweißprozesses des sendenden Schweißgerätes (1a) steht, und der Schweißzyklus (SZ2) des Impulsschweißprozess des empfangenden Schweißgerätes (1b) auf den empfangenen Synchronisationspuls (SP) synchronisiert wird, **dadurch gekennzeichnet, dass** entweder als Synchronisationsinformation (SI) zusätzlich die Impulsfrequenz (f_{D1}) des sendenden Schweißgerätes (1a) gesendet wird, und dass im empfangenden Schweißgerät (1b) mittels eines bekannten Frequenzteilers (F) aus der erhaltenen Impulsfrequenz (f_{D1}) des sendenden Schweißgerätes (1a) die vom empfangenden Schweißgerät (1b) einzustellende Impulsfrequenz (f_{D2}) ermittelt wird oder das sendende Schweißgerät (1a) als Synchronisationsinformation (SI) laufend Synchronisationspulse (SP) mit der Impulsfrequenz (f_{D1}) des sendenden Schweißgerätes (1a) an das empfangende Schweißgerät (1b) sendet und das empfangende Schweißgerät (1b) aus der Periode der empfangenen Synchronisationspulse (SP) die Impulsfrequenz (f_{D1}) des sendenden Schweißgerätes (1a) ermittelt und daraus mittels eines bekannten Frequenzteilers (F) die im empfangenden Schweißgerät (1b) einzustellende Impulsfrequenz (f_{D2}) ermittelt.

2. Verfahren nach Anspruch 1, **dadurch gekennzeichnet, dass** der Frequenzteiler (F) im empfangenden Schweißgerät (1b) aus einer bekannten Schweißkennlinie mindestens eines Schweißparameters ermittelt wird und aus der Impulsfrequenz (f_{D1}) des sendenden Schweißgerätes (1a), oder der zugehörigen Schweißdrahtvorschubgeschwindigkeiten (v_{D}), und dem Frequenzteiler (F) die vom empfangenden Schweißgerät (1b) einzustellende Impulsfrequenz (f_{D2}) ermittelt wird.

3. Verfahren nach Anspruch 2, **dadurch gekennzeichnet, dass** aus der Schweißkennlinie des Impulsschweißprozesses des empfangenden Schweißgerätes (1b) eine für den Impulsschweißprozess benötigte Impulsfrequenz (f_{D2}) ermittelt wird, wobei aus der benötigten Impulsfrequenz (f_{D2}) und der erhaltenen Impulsfrequenz (f_{D1}) des sendenden Schweißgerätes (1a), oder der zugehörigen Schweißdrahtvorschubgeschwindigkeiten (v_{D}), der Frequenzteiler (F) ermittelt wird.

4. Verfahren nach Anspruch 3, **dadurch gekennzeichnet, dass** als Frequenzteiler (F) das auf die nächstgrößere oder nächstkleinere ganze Zahl gesetzte Verhältnis zwischen der erhaltenen Impulsfrequenz (f_{D1}) des sendenden Schweißgerätes (1a) und der benötigten Impulsfrequenz (f_{D2}) verwendet wird.

5. Verfahren nach einem der Ansprüche 1 bis 4, **dadurch gekennzeichnet, dass** der Synchronisationspuls (SP) mit einer vorgegebenen Phasenverschiebung (t_{P}) zum Beginn des Schweißzyklus (SZ1) im sendenden Schweißgerät (1a) gesendet wird und/oder der Schweißzyklus (SZ2) im empfangenden Schweißgerät (1b) mit einer vorgegebenen Phasenverschiebung (t_{P}) nach dem Empfang des Synchronisationspulses (SP) gestartet wird.

6. Verfahren nach Anspruch 5, **dadurch gekennzeichnet, dass** die vom empfangenden Schweißgerät (1b) einzustellende Phasenverschiebung (t_{P}) als zusätzliche Synchronisationsinformation (SI) vom sendenden Schweißgerät (1a) an zumindest ein empfangendes Schweißgerät (1b) gesendet wird.

7. Verfahren nach einem der Ansprüche 1 bis 6, **dadurch gekennzeichnet, dass** die Synchronisation während des Mehrfach-Impulsschweißverfahrens gestartet oder gestoppt wird.

8. Verfahren nach einem der Ansprüche 1 bis 7, **dadurch gekennzeichnet, dass** die Impulsfrequenz (f_{D1}) des Impulsschweißprozesses des sendenden Schweißgerätes (1a) oder die Impulsfrequenz (f_{D2}) des Impulsschweißprozesses eines nachgeführten Impulsschweißprozesses und/oder eine Phasenverschiebung (t_{P}) während des Mehrfach-Impulsschweißverfahrens geändert wird.

9. Anordnung zur Durchführung eines Mehrfach-Impulsschweißverfahrens mit zumindest zwei Schweißgeräten (1a, 1b), ausgestaltet zur Durchführung von zumindest zwei Impulsschweißprozessen, wobei ein Impulsschweißprozess aus periodisch mit einer Impulsfrequenz (f_{D1}, f_{D2}) wiederholten Schweißzyklen (SZ1, SZ2) mit einer Impulsstromphase und einer Grundstromphase besteht, wobei die Schweißgeräte (1a, 1b) jeweils eine Steuereinheit (7a, 7b) aufweisen und mittels einer Kommunikationsverbindung (15) miteinander verbunden sind und die Steuereinheit (7a) eines sendendes Schweißgeräts (1a) ausgestaltet ist, über die Kommunikationsverbindung (15) eine Synchronisationsinformation (SI) an zumindest die Steuereinheit (7b) eines empfangenden Schweißgeräts (1b) zu senden, wobei die Steuereinheit (7b) des empfangenden Schweißgeräts (1b) ausgestaltet ist, diese Synchronisationsinformation (SI) zu verwenden, um den mit dem empfangenden Schweißgerät (1b) ausgeführten Impulsschweißprozess auf den mit dem sendenden Schweißgerät (1a) ausgeführten Impulsschweißprozess zu synchronisieren, wobei die Steuereinheit (7a) des sendenden Schweißgeräts (1a) ausgestaltet ist, als Synchronisationsinformation (SI) zumindest einen Synchronisationspuls (SP), welcher in einem definierten zeitlichen Bezug zum Schweißzyklus (SZ1) des Impulsschweißprozesses des sendenden Schweißgerätes (1a) steht, an zumindest ein empfangendes Schweißgerät (1b) zu senden, und die Steuereinheit (7b) des empfangenden Schweißgeräts (1b) ausgestaltet ist, den Schweißzyklus (SZ2) des Impulsschweißprozesses des empfangenden Schweißgeräts (1b) auf den empfangenen Synchronisationspuls (SP) zu synchronisieren, **dadurch gekennzeichnet, dass** die Steuereinheit (7a) des sendenden Schweißgerät (1a) ausgestaltet ist, als Synchronisationsinformation (SI) entweder zusätzlich die Impulsfrequenz (f_{D1}) des sendenden Schweißgerätes (1a) zu senden, und die Steuereinheit (7b) des empfangenden Schweißgeräts (1b) ausgestaltet ist, mittels eines bekannten Frequenzteilers (F) aus der erhaltenen Impulsfrequenz (f_{D1}) des sendenden Schweißgerätes (1a) die vom empfangenden Schweißgerät (1b) einzustellende Impulsfrequenz (f_{D2}) zu ermitteln, **oder** dass die Steuereinheit (7a) des sendenden Schweißgeräts (1a) ausgestaltet ist, als Synchronisationsinformation (SI) laufend Synchronisationspulse (SP) mit der Impulsfrequenz (f_{D1}) des sendenden Schweißgerätes (1a) an das empfangende Schweißgerät (1b) zu senden, und die Steuereinheit (7b) des empfangenden Schweißgeräts (1b) ausgestaltet ist, aus der Periode der empfangenen Synchronisationspulse (SP) die Impulsfrequenz (f_{D1}) des sendenden Schweißgerätes (1a) zu ermitteln und daraus mittels eines bekannten Frequenzteilers (F) die im empfangenden Schweißgerät (1b) einzustellende Impulsfrequenz (f_{D2}) zu ermitteln.

10. Anordnung nach Anspruch 9, **dadurch gekennzeichnet, dass** die Steuereinheit (7b) des empfangenden Schweißgeräts (1b) ausgestaltet ist, den Frequenzteiler (F) aus einer bekannten Schweißkennlinie mindestens eines Schweißparameters zu ermitteln und aus der Impulsfrequenz (f_{D1}) des sendenden Schweißgerätes (1a), oder der zugehörigen Schweißdrahtvorschubgeschwindigkeiten (v_{D}), und dem Frequenzteiler (F) die vom empfangenden Schweißgerät (1b) einzustellende Impulsfrequenz (f_{D2}) zu ermitteln.

11. Anordnung nach Anspruch 10, **dadurch gekennzeichnet, dass** die Steuereinheit (7b) des empfangenden Schweißgeräts (1b) ausgestaltet ist, aus der Schweißkennlinie des Impulsschweißprozesses des empfangenden Schweißgerätes (1b) eine für den Impulsschweißprozess benötigte Impulsfrequenz (f_{D2}) zu ermitteln und aus der benötigten Impulsfrequenz (f_{D2}) und der erhaltenen Impulsfrequenz (f_{D1}) des sendenden Schweißgerätes (1a), oder der zugehörigen Schweißdrahtvorschubgeschwindigkeiten (v_{D}), den Frequenzteiler (F) zu ermitteln.

12. Anordnung nach Anspruch 11, **dadurch gekennzeichnet, dass** die Steuereinheit (7b) des empfangenden Schweißgeräts (1b) ausgestaltet ist, als Frequenzteiler (F) das auf die nächstgrößere oder nächstkleinere ganze Zahl gesetzte Verhältnis zwischen der erhaltenen Impulsfrequenz (f_{D1}) des sendenden Schweißgerätes (1a) und der benötigten Impulsfrequenz (f_{D2}) zu verwenden.

## Claims

1. Method for synchronizing at least two pulse welding processes for carrying out a multiple pulse welding process, whereas a pulse welding process consists of periodically at a pulse frequency (f_{D1}, f_{D2}) repeated welding cycles (SZ1, SZ2) having a pulse current phase and a base current phase, each pulse welding process being performed by a welding device (1a, 1b), wherein the welding devices (1a, 1b) are connected to one another by a communication link (15) and a synchronization information (SI) is transmitted via the communication link (15) from a transmitting welding device (1a) to at least one receiving welding device (1b), to synchronize the pulse welding process performed by the receiving welding device (1b) with the pulse welding process performed by the transmitting welding device (1a), wherein the transmitting welding device (1a) transmits at least one synchronization pulse (SP) as synchronization information (SI) to at least one receiving welding device (1b), wherein the at least one synchronization pulse (SP) is in a defined temporal relation to the welding cycle (SZ1) of the pulse welding process of the transmitting welding device (1a), and the welding cycle (SZ2) of the pulse welding process of the receiving welding device (1b) is synchronized based on the received synchronization pulse (SP), **characterized in that** either the pulse frequency (f_{D1}) of the transmitting welding device (1a) is additionally transmitted as synchronization information (SI), and that the pulse frequency (f_{D2}) to be set by the receiving welding device (1b) is determined in the receiving welding device (1b) from the received pulse frequency (f_{D1}) of the transmitting welding device (1a) using a known frequency divider (F) or the transmitting welding device (1a) continuously transmits synchronization pulses (SP) as synchronization information (SI) at the pulse frequency (f_{D1}) of the transmitting welding device (1a) to the receiving welding device (1b), and that the receiving welding device (1b) determines the pulse frequency (f_{D1}) of the transmitting welding device (1a) from the period of the received synchronization pulses (SP) and from this determines the pulse frequency (f_{D2}) to be set in the receiving welding device (1b) using a known frequency divider (F).

2. Method according to claim 1, **characterized in that** the frequency divider (F) is determined in the receiving welding device (1b) from a known welding characteristic curve of at least one welding parameter, and the pulse frequency (f_{D2}) to be set by the receiving welding device (1b) is determined from the pulse frequency (f_{D1}) of the transmitting welding device (1a), or the associated welding wire feed speeds (v_{D}), and from the frequency divider (F).

3. Method according to claim 2, **characterized in that** a pulse frequency (f_{D2}) required for the pulse welding process is determined from the welding characteristic curve of the pulse welding process of the receiving welding device (1b), wherein the frequency divider (F) is determined from the required pulse frequency (f_{D2}) and the received pulse frequency (f_{D1}) of the transmitting welding device (1a), or the associated welding wire feed speeds (v_{D}).

4. Method according to claim 3, **characterized in that** the ratio between the received pulse frequency (f_{D1}) of the transmitting welding device (1a) and the required pulse frequency (f_{D2}), that is set to the nearest smaller or larger integer, is used as the frequency divider (F).

5. Method according to any of the claims 1 to 4, **characterized in that** the synchronization pulse (SP) is transmitted with a predetermined phase shift (t_{P}) at the start of the welding cycle (SZ1) in the transmitting welding device (1a) and/or the welding cycle (SZ2) is started in the receiving welding device (1b) with a predetermined phase shift (t_{P}) after the synchronization pulse (SP) is received.

6. Method according to claim 5, **characterized in that** the phase shift (t_{P}) to be set by the receiving welding device (1b) is transmitted as additional synchronization information (SI) from the transmitting welding device (1a) to at least one receiving welding device (1b).

7. Method according to any of claims 1 to 6, **characterized in that** the synchronization is started or stopped during the multiple pulse welding process.

8. Method according to any of claims 1 to 7, **characterized in that** the pulse frequency (f_{D1}) of the pulse welding process of the transmitting welding device (1a) or the pulse frequency (f_{D2}) of the pulse welding process of a trailing pulse welding process and/or a phase shift (t_{P}) is changed during the multiple pulse welding process.

9. An arrangement for carrying out a multiple pulse welding process with at least two welding devices (1a, 1b) designed to carry out at least two pulse welding processes, wherein a pulse welding process consists of periodically at a pulse frequency (f_{D1}, f_{D2}) repeated welding cycles (SZ1, SZ2) having a pulse current phase and a base current phase, wherein the welding devices (1a, 1b) each comprise a control unit (7a, 7b) and they are connected to one another by a communication link (15) and the control unit (7a) of a transmitting welding device (1a) is configured to transmit a synchronization information (SI) via the communication link (15) to at least the control unit (7b) of a receiving welding device (1b), wherein the control unit (7b) of the receiving welding device (1b) is configured to use said synchronization information (SI) to synchronize the pulse welding process performed by the receiving welding device (1b) with the pulse welding process performed by the transmitting welding device (1a), wherein the control unit (7a) of the transmitting welding device (1a) is configured to transmit at least one synchronization pulse (SP), which is in a defined temporal relation to the welding cycle (SZ1) of the pulse welding process of the transmitting welding device (1a), as synchronization information (SI) to at least one receiving welding device (1b), and the control unit (7b) of the receiving welding device (1b) is configured to synchronize the welding cycle (SZ2) of the pulse welding process of the receiving welding device (1b) based on the received synchronization pulse (SP), **characterized in that** the control unit (7a) of the transmitting welding device (1a) is configured to transmit, as synchronization information (SI), either additionally the pulse frequency (f_{D1}) of the transmitting welding device (1a) and the control unit (7b) of the receiving welding device (1b) is configured to determine the pulse frequency (f_{D2}) to be set by the receiving welding device (1b) from the received pulse frequency (f_{D1}) of the transmitting welding device (1a) using a known frequency divider (F), **or that** the control unit (7a) of the transmitting welding device (1a) is designed to continuously transmit synchronization pulses (SP) with the pulse frequency (fD1) of the transmitting welding device (1a) to the receiving welding device (1b) as synchronization information (SI), and the control unit (7b) of the receiving welding device (1b) is configured to determine the pulse frequency (f_{D1}) of the transmitting welding device (1a) from the period of the received synchronization pulses (SP) to determine the pulse frequency (f_{D1}) of the transmitting welding device (1a) and, from this, to determine the pulse frequency (f_{D2}) to be set in the receiving welding device (1b) using a known frequency divider (F).

10. The arrangement according to claim 9, **characterized in that** the control unit (7b) of the receiving welding device (1b) is configured, to determine the frequency divider (F) from a known welding characteristic curve of at least one welding parameter, and from the pulse frequency (f_{D1}) of the transmitting welding device (1a) or the associated welding wire feed speeds (v_{D}), and to determine the pulse frequency (f_{D2}) to be set by the receiving welding device (1b) from frequency divider (F).

11. The arrangement according to claim 10, **characterized in that** the control unit (7b) of the receiving welding device (1b) is configured, to determine a pulse frequency (f_{D2}) required for the pulse welding process from the welding characteristic curve of the pulse welding process of the receiving welding device (1b) and to determine the frequency divider (F) from the required pulse frequency (f_{D2}) and the received pulse frequency (f_{D1}) of the transmitting welding device (1a), or the associated welding wire feed speeds (v_{D}).

12. The arrangement according to claim 11, **characterized in that** the control unit (7b) of the receiving welding device (1b) is configured, to use the ratio, being set to the nearest smaller or larger integer between the received pulse frequency (f_{D1}) of the transmitting welding device (1a) and the required pulse frequency (f_{D2}), as the frequency divider (F).

## Revendications

1. Procédé de synchronisation d'au moins deux processus de soudage par impulsions pour la réalisation d'un procédé de soudage par impulsions multiples, dans lequel un processus de soudage par impulsions est constitué de cycles de soudage (SZ1, SZ2) répétés périodiquement à une fréquence d'impulsions (f_{D1}, f_{D2}) avec une phase de courant d'impulsion et une phase de courant de base, dans lequel chaque processus de soudage par impulsions est réalisé avec un appareil de soudage (1a, 1b), dans lequel les appareils de soudage (1a, 1b) sont reliés entre eux par le biais d'une liaison de communication (15) et, par l'intermédiaire de la liaison de communication (15), une information de synchronisation (SI) est envoyée par un appareil de soudage émetteur (1a) à au moins un appareil de soudage récepteur (1b) et cette information de synchronisation (SI) est utilisée dans l'appareil de soudage récepteur (1b), pour synchroniser le processus de soudage par impulsions exécuté avec l'appareil de soudage récepteur (1b) sur le processus de soudage par impulsions exécuté avec l'appareil de soudage émetteur (1a), dans lequel l'appareil de soudage émetteur (1a) envoie comme information de synchronisation (SI) au moins une impulsion de synchronisation (SP) à au moins un appareil de soudage récepteur (1b), dans lequel l'au moins une impulsion de synchronisation (SP) se trouve dans une relation temporelle définie par rapport au cycle de soudage (SZ1) du processus de soudage par impulsions de l'appareil de soudage émetteur (1a), et le cycle de soudage (SZ2) du processus de soudage par impulsions de l'appareil de soudage récepteur (1b) est synchronisé sur l'impulsion de synchronisation (SP) reçue, **caractérisé en ce que** soit la fréquence d'impulsions (f_{D1}) de l'appareil de soudage émetteur (1a) est envoyée en plus comme information de synchronisation (SI), et **en ce que,** dans l'appareil de soudage récepteur (1b), la fréquence d'impulsions (f_{D2}) à régler par l'appareil de soudage récepteur (1b) est déterminée par le biais d'un diviseur de fréquence (F) connu à partir de la fréquence d'impulsions (f_{D1}) obtenue de l'appareil de soudage émetteur (1a) , **ou bien** l'appareil de soudage émetteur (1a) envoie en continu, comme information de synchronisation (SI), des impulsions de synchronisation (SP) avec la fréquence d'impulsions (f_{D1}) de l'appareil de soudage émetteur (1a) à l'appareil de soudage récepteur (1b) et l'appareil de soudage récepteur (1b) détermine la fréquence d'impulsions (f_{D1}) de l'appareil de soudage émetteur (1a) à partir de la période des impulsions de synchronisation (SP) reçues et détermine à partir de là la fréquence d'impulsions (f_{D2}) à régler dans l'appareil de soudage récepteur (1b) par le biais d'un diviseur de fréquence (F) connu.

2. Procédé selon la revendication 1, **caractérisé en ce que** le diviseur de fréquence (F) est déterminé dans l'appareil de soudage récepteur (1b) à partir d'une courbe caractéristique de soudage connue d'au moins un paramètre de soudage et la fréquence d'impulsions (f_{D2}) à régler par l'appareil de soudage récepteur (1b) est déterminée à partir de la fréquence d'impulsions (f_{D1}) de l'appareil de soudage émetteur (1a), ou des vitesses d'avance de fil d'apport (v_{D}) correspondantes, et du diviseur de fréquence (F).

3. Procédé selon la revendication 2, **caractérisé en ce qu'**une fréquence d'impulsions (f_{D2}) nécessaire pour le processus de soudage par impulsions est déterminée à partir de la courbe caractéristique de soudage du processus de soudage par impulsions de l'appareil de soudage récepteur (1b), dans lequel le diviseur de fréquence (F) est déterminé à partir de la fréquence d'impulsions (f_{D2}) nécessaire et de la fréquence d'impulsions (f_{D1}) obtenue de l'appareil de soudage émetteur (1a), ou des vitesses d'avance de fil d'apport (v_{D}) correspondantes.

4. Procédé selon la revendication 3, **caractérisé en ce que** le rapport, fixé au nombre entier immédiatement supérieur ou inférieur, entre la fréquence d'impulsions (f_{D1}) obtenue de l'appareil de soudage émetteur (1a) et la fréquence d'impulsions (f_{D2}) nécessaire est utilisé comme diviseur de fréquence (F).

5. Procédé selon l'une des revendications 1 à 4, **caractérisé en ce que** l'impulsion de synchronisation (SP) est envoyée avec un déphasage (t_{P}) prédéterminé au début du cycle de soudage (SZ1) dans l'appareil de soudage émetteur (1a) et/ou le cycle de soudage (SZ2) est démarré dans l'appareil de soudage récepteur (1b) avec un déphasage (t_{P}) prédéterminé après la réception de l'impulsion de synchronisation (SP).

6. Procédé selon la revendication 5, **caractérisé en ce que** le déphasage (t_{P}) à régler par l'appareil de soudage récepteur (1b) est envoyé comme information de synchronisation (SI) supplémentaire par l'appareil de soudage émetteur (1a) à au moins un appareil de soudage récepteur (1b).

7. Procédé selon l'une des revendications 1 à 6, **caractérisé en ce que** la synchronisation est démarrée ou arrêtée pendant le procédé de soudage par impulsions multiples.

8. Procédé selon l'une des revendications 1 à 7, **caractérisé en ce que** la fréquence d'impulsions (f_{D1}) du processus de soudage par impulsions de l'appareil de soudage émetteur (1a) ou la fréquence d'impulsions (f_{D2}) du processus de soudage par impulsions d'un processus de soudage par impulsions à suivi et/ou un déphasage (t_{P}) sont modifiés pendant le procédé de soudage par impulsions multiples.

9. Dispositif pour la réalisation d'un procédé de soudage par impulsions multiples comportant au moins deux appareils de soudage (1a, 1b), conçus pour la réalisation d'au moins deux processus de soudage par impulsions, dans lequel un processus de soudage par impulsions est constitué de cycles de soudage (SZ1, SZ2) répétés périodiquement avec une fréquence d'impulsions (f_{D1}, f_{D2}) avec une phase de courant d'impulsion et une phase de courant de base, dans lequel les appareils de soudage (1a, 1b) présentent respectivement une unité de commande (7a, 7b) et sont reliés entre eux par le biais d'une liaison de communication (15) et l'unité de commande (7a) d'un appareil de soudage émetteur (1a) est conçue pour envoyer une information de synchronisation (SI) à au moins l'unité de commande (7b) d'un appareil de soudage récepteur (1b) par l'intermédiaire de la liaison de communication (15), dans lequel l'unité de commande (7b) de l'appareil de soudage récepteur (1b) est conçue pour utiliser cette information de synchronisation (SI) afin de synchroniser le processus de soudage par impulsions exécuté avec l'appareil de soudage récepteur (1b) sur le processus de soudage par impulsions exécuté avec l'appareil de soudage émetteur (1a), dans lequel l'unité de commande (7a) de l'appareil de soudage émetteur (1a) est conçue pour envoyer comme information de synchronisation (SI) au moins une impulsion de synchronisation (SP) qui se trouve dans une relation temporelle définie par rapport au cycle de soudage (SZ1) du processus de soudage par impulsions de l'appareil de soudage émetteur (1a), à au moins un appareil de soudage récepteur (1b), et l'unité de commande (7b) de l'appareil de soudage récepteur (1b) est conçue pour synchroniser le cycle de soudage (SZ2) du processus de soudage par impulsions de l'appareil de soudage récepteur (1b) sur l'impulsion de synchronisation (SP) reçue, **caractérisé en ce que** l'unité de commande (7a) de l'appareil de soudage émetteur (1a) est conçue, soit pour envoyer en plus, comme information de synchronisation (SI), la fréquence d'impulsions (f_{D1}) de l'appareil de soudage émetteur (1a), et l'unité de commande (7b) de l'appareil de soudage récepteur (1b) est conçue pour déterminer, par le biais d'un diviseur de fréquence (F) connu, à partir de la fréquence d'impulsions (f_{D1}) obtenue de l'appareil de soudage émetteur (1a), la fréquence d'impulsions (f_{D2}) à régler par l'appareil de soudage récepteur (1b), ou **en ce que** l'unité de commande (7a) de l'appareil de soudage émetteur (1a) est conçue pour envoyer en continu, comme information de synchronisation (SI), des impulsions de synchronisation (SP) avec la fréquence d'impulsions (f_{D1}) de l'appareil de soudage émetteur (1a) à l'appareil de soudage récepteur (1b), et l'unité de commande (7b) de l'appareil de soudage récepteur (1b) est conçue, pour déterminer, à partir de la période des impulsions de synchronisation (SP) reçues, la fréquence des impulsions (f_{D1}) de l'appareil de soudage émetteur (1a) et pour déterminer à partir de là, par le biais d'un diviseur de fréquence (F) connu, la fréquence d'impulsions (f_{D2}) à régler dans l'appareil de soudage récepteur (1b).

10. Dispositif selon la revendication 9, **caractérisé en ce que** l'unité de commande (7b) de l'appareil de soudage récepteur (1b) est conçue pour déterminer le diviseur de fréquence (F) à partir d'une courbe caractéristique de soudage connue d'au moins un paramètre de soudage et pour déterminer, à partir de la fréquence d'impulsions (f_{D1}) de l'appareil de soudage émetteur (1a), ou des vitesses d'avance du fil d'apport (v_{D}) correspondantes, et du diviseur de fréquence (F), la fréquence d'impulsions (f_{D2}) à régler par l'appareil de soudage récepteur (1b).

11. Dispositif selon la revendication 10, **caractérisé en ce que** l'unité de commande (7b) de l'appareil de soudage récepteur (1b) est conçue pour déterminer, à partir de la courbe caractéristique de soudage du processus de soudage par impulsions de l'appareil de soudage récepteur (1b), une fréquence d'impulsions (f_{D2}) nécessaire pour le processus de soudage par impulsions et pour déterminer le diviseur de fréquence (F) à partir de la fréquence d'impulsions (f_{D2}) nécessaire et de la fréquence d'impulsions (f_{D1}) obtenue de l'appareil de soudage émetteur (1a), ou des vitesses d'avance du fil d'apport (v_{D}) associées.

12. Dispositif selon la revendication 11, **caractérisé en ce que** l'unité de commande (7b) de l'appareil de soudage récepteur (1b) est conçue pour utiliser comme diviseur de fréquence (F) le rapport réglé sur le nombre entier immédiatement supérieur ou inférieur entre la fréquence d'impulsions (f_{D1}) obtenue de l'appareil de soudage émetteur (1a) et la fréquence d'impulsions (f_{D2}) nécessaire.
